# EUROPEAN PATENT SPECIFICATION

(11) **EP 3 815 873 B1**
(45) Date of publication and mention of the grant of the patent: **05.07.2023**
(21) Application number: 20204514.2
(22) Date of filing: 29.10.2020
(51) Int. Cl.: B29C 45/83

(54) **LUBRICATION SYSTEM AND INJECTION MOLDING MACHINE**
SCHMIERSYSTEM UND SPRITZGIESSMASCHINE
SYSTÈME DE LUBRIFICATION ET MACHINE DE MOULAGE PAR INJECTION

(30) Priority: 31.10.2019 JP 2019199302
(43) Date of publication of application: 05.05.2021
(73) Proprietor: Sumitomo Heavy Industries, Ltd., Tokyo 141-6025 (JP)
(72) Inventor: MATSUTAKE, Yoshitaka, Chiba-shi Chiba, 263-0001 (JP); HATAKEYAMA, Takuro, Chiba-shi Chiba, 263-0001 (JP); KOMINE, Kento, Chiba-shi Chiba, 263-0001 (JP)
(74) Representative: Walcher, Armin

(56) References cited:
- EP-A1- 1 265 008
- GB-A- 1 559 369
- JP-A- 2003 011 196
- KR-U- 20100 000 798
- US-A- 3 800 914

## Description

### BACKGROUND OF THE INVENTION

### Field of the Invention

The present invention relates to an injection molding machine.

### Description of Related Art

In an injection molding machine, a motion conversion mechanism such as a ball screw which converts a rotation force of a motor into a linear motion is used as a drive source for the linear motion. Lubricating oil is supplied to a bearing which supports the ball screw or a rotary shaft.

Japanese Unexamined Patent Publication No. 2003-083417 discloses a lubrication device of a linear motion device for a molding machine, which includes a storage member which covers a periphery of a screw and stores lubricating oil therein and a lubricating oil circulation pipe which is connected to the storage member.

Japanese Unexamined Patent Publication No. 2003-011196 discloses a lubrication system including an oil casing, and discloses that metal powder is collected from lubricating oil on a lower portion of the oil casing.

European Patent Publication No. 1 265 008, Great Britain Patent Publication No. 1 559 369, Korean Utility Model No. 2010 0000798, and United States Patent No. 3 800 914 disclose a lubrication system including a magnet or an excitation coil for collecting a metal powder from the lubricating oil.

### SUMMARY OF THE INVENTION

Meanwhile, when a ball screw or a bearing is driven, a foreign matter such as abrasion powder is generated, and thus, there is concern that the foreign matter is mixed with lubricating oil. The foreign matter may get caught in the ball screw or bearing, which may cause the ball screw or bearing to wear prematurely.

Therefore, an object of the present invention is to provide a lubrication system and an injection molding machine which improve durability and stability.

According to an aspect of the present invention, there is provided an injection molding machine including: a tank which stores lubrication oil; an oil bath which accommodates a lubrication portion of the injection molding machine; a circulation mechanism which circulates the lubricating oil between the tank and the oil bath, in which the injection molding machine further comprises: a magnetic filter which is provided in the circulation mechanism and collects a foreign matter flowing into the tank; and a collection portion which is provided in the oil bath, is capable of being separated from the oil bath, and collects abrasion powder staying in the lubricating oil in the oil bath.

According to the present invention, it is possible to provide a lubrication system and an injection molding machine having improved durability and stability.

### BRIEF DESCRIPTION OF THE DRAWINGS

Fig. 1 is a view showing a state when mold opening of an injection molding machine according an embodiment is completed.
Fig. 2 is a view showing a state when a mold of the injection molding machine according to the embodiment is clamped.
Fig. 3 is a configuration view schematically showing an injection unit.
Fig. 4 is a schematic cross-sectional view showing a lubrication structure of a motion conversion mechanism.
Fig. 5 is a schematic cross-sectional view showing a lubrication structure of a motion conversion mechanism.
Fig. 6 is a block diagram of a lubricating oil supply system.
Figs. 7A and 7B are schematic views showing a state of lubricating oil in an oil bath.
Fig. 8 is a schematic cross-sectional view showing another example of the lubrication structure of the motion conversion mechanism.
Fig. 9 is a schematic cross-sectional view showing an example of structure and arrangement of a magnet.

### DETAILED DESCRIPTION OF THE INVENTION

Hereinafter, an embodiment of the present invention is described with reference to the drawings. In each drawing, the same or corresponding reference numerals are assigned to the same or corresponding configurations, and descriptions thereof are omitted.

### (Injection Molding Machine)

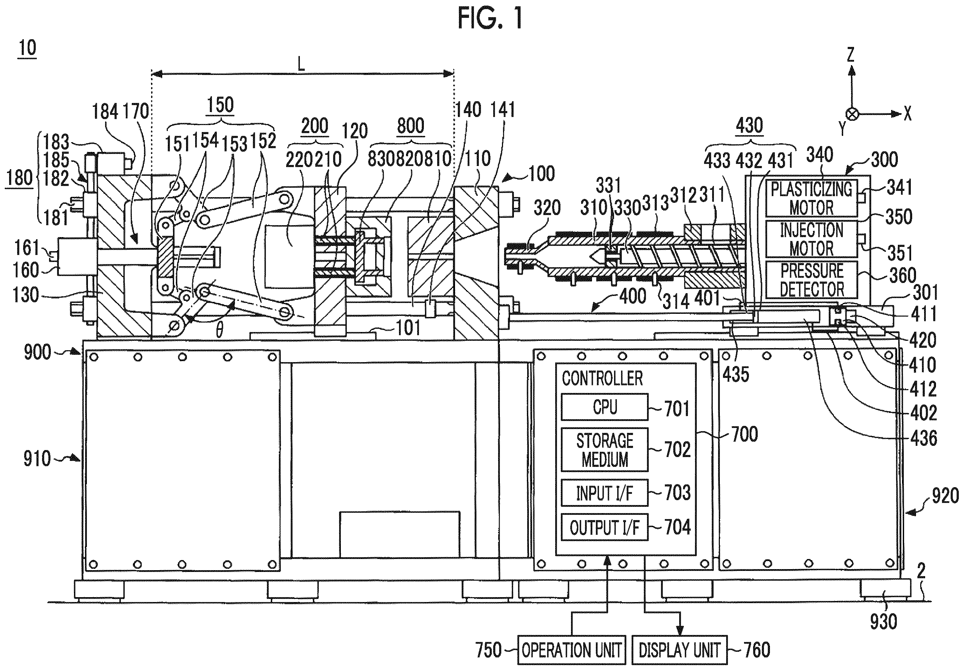

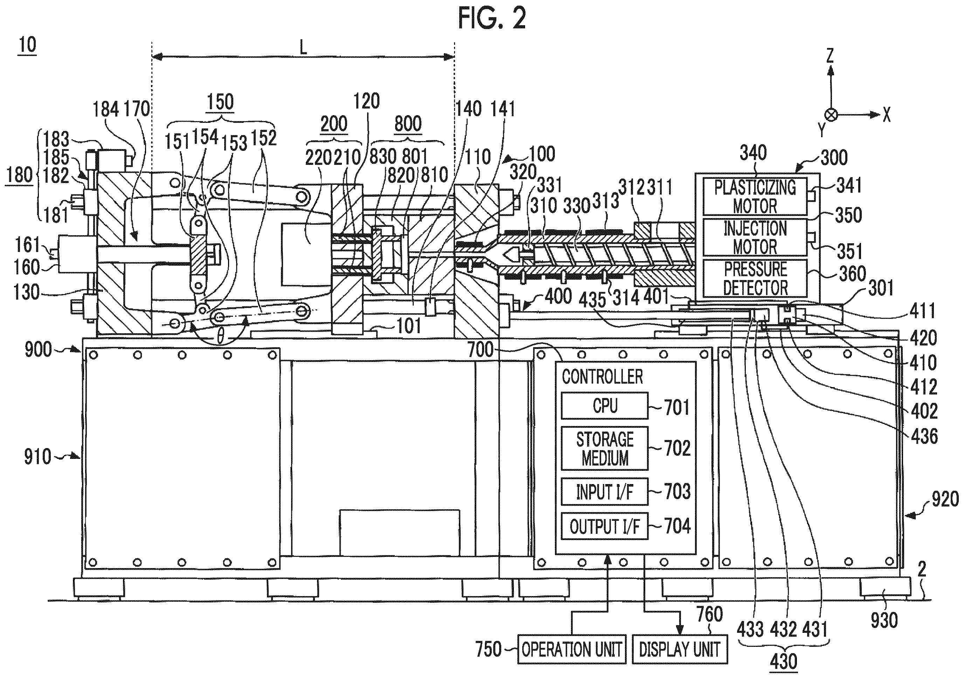

Fig. 1 is a view showing a state when mold opening of an injection molding machine according an embodiment is completed. Fig. 2 is a view showing a state when a mold of the injection molding machine according to the embodiment is clamped. In the present specification, an X-axis direction, a Y-axis direction, and a Z-axis direction are directions perpendicular to each other. The X-axis direction and the Y-axis direction indicate a horizontal direction, and the Z-axis direction indicates a vertical direction. In a case where a mold clamping unit 100 is a horizontal type mold clamping unit, the X-axis direction is mold opening and closing directions, and the Y-axis direction is a width direction of an injection molding machine 10. A negative side in the Y-axis direction is referred to as an operation side, and a positive side in the Y-axis direction is referred to as a counter operation side.

As shown in Figs. 1 to 2, the injection molding machine 10 includes the mold clamping unit 100 which openings or closes a mold unit 800, an ejector unit 200 which ejects a molding product molded by the mold unit 800, an injection unit 300 which injects a molding material into the mold unit 800, a moving unit 400 which moves the injection unit 300 forward or rearward with respect to the mold unit 800, a controller 700 which controls each component of the injection molding machine 10, and a frame 900 which supports each component of the injection molding machine 10. The frame 900 includes a mold clamping unit frame 910 which supports the mold clamping unit 100 and an injection unit frame 920 which supports the injection unit 300. The mold clamping unit frame 910 and the injection unit frame 920 are installed on a floor 2 via a leveling adjuster 930, respectively. The controller 700 is disposed in an internal space of the injection unit frame 920. Hereinafter, each component of the injection molding machine 10 will be described.

### (Mold Clamping Unit)

In descriptions of the mold clamping unit 100, a movement direction (for example, X-axis positive direction) of a movable platen 120 when a mold is closed is defined as a front side, and a movement direction (for example, X-axis negative direction) of the movable platen 120 when the mold is open is defined as a rear side.

The mold clamping unit 100 performs mold closing, pressurization, mold clamping, depressurization, and mold opening of the mold unit 800. The mold unit 800 includes a stationary mold 810 and a movable mold 820.

For example, the mold clamping unit 100 is a horizontal type clamping unit and the mold opening and closing directions are the horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the mold clamping unit frame 910. The stationary mold 810 is attached to a surface of the stationary platen 110 facing the movable platen 120.

The movable platen 120 is disposed to be movable in the mold opening and closing directions with respect to the mold clamping unit frame 910. A guide 101 which guides the movable platen 120 is placed on the mold clamping unit frame 910. The movable mold 820 is attached to a surface of the movable platen 120 facing the stationary platen 110. The movable platen 120 moves forward or rearward with respect to the stationary platen 110, and thus, mold closing, pressurization, mold clamping, depressurization, and mold opening of the mold unit 800 are performed.

The toggle support 130 is disposed so as to be separated from the stationary platen 110, and is placed on the mold clamping unit frame 910 to be movable in mold opening and closing directions. In addition, the toggle support 130 may be movably disposed along a guide which is placed on the mold clamping unit frame 910. The guide of the toggle support 130 may be also used as the guide 101 of the movable platen 120.

In addition, in the present embodiment, the stationary platen 110 is fixed to the mold clamping unit frame 910, and the toggle support 130 is movably disposed in the mold opening and closing directions with respect to the mold clamping unit frame 910. However, the toggle support 130 may be fixed to the mold clamping unit frame 910, and the stationary platen 110 may be movably disposed in the mold opening and closing directions with respect to the mold clamping unit frame 910.

The stationary platen 110 and the toggle support 130 are connected to each other with a gap L in the mold opening and closing directions by the tie bar 140. A plurality of (for example, four) tie bars 140 may be used. The plurality of tie bars 140 are disposed to be parallel in the mold opening and closing directions and extend according to a mold clamping force . A tie bar strain detector 141 which detects strain of the tie bar 140 may be provided in at least one tie bar 140. The tie bar strain detector 141 sends a signal indicating a detection result to the controller 700. The detection result of the tie bar strain detector 141 is used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and an attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 includes a crosshead 151, a pair of link groups, or the like. Each of the pair of link groups includes a first link 152 and a second link 153 which are bendably/strechably connected to each other by pins or the like. The first link 152 is oscillatingly attached to the movable platen 120 with a pin or the like. The second link 153 is oscillatingly attached to the toggle support 130 with a pin or the like. The second link 153 is attached to the crosshead 151 via a third link 154. If the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be connected to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft and a screw nut which is screwed to the screw shaft. A ball or a roller may be interposed between the screw shaft and the screw nut.

The mold clamping unit 100 performs a mold closing process, a pressurization process, a mold clamping process, a depressurization process, a mold opening process, or the like under the control of the controller 700.

In the mold closing process, the mold clamping motor 160 is driven to move the crosshead 151 forward to a mold closing completion position at a set movement speed. Accordingly, the movable platen 120 moves forward and the movable mold 820 comes into contact with the stationary mold 810. For example, a position or movement speed of the crosshead 151 is detected using a mold clamping motor encoder 161 or the like. The mold clamping motor encoder 161 detects the rotation of the mold clamping motor 160 and sends a signal indicating the detection result to the controller 700.

In addition, a crosshead position detector which detects the position of the crosshead 151 and a crosshead movement speed detector which detects the movement speed of the crosshead 151 are not limited to the mold clamping motor encoder 161, and a general detector can be used. In addition, a movable platen position detector which detects the position of the movable platen 120 and a movable platen movement speed detector which detects the movement speed of the movable platen 120 are not limited to the mold clamping motor encoder 161, and a general detector can be used.

In the pressurization process, the mold clamping motor 160 is further driven to further move the crosshead 151 forward from the mold closing completion position to a mold clamping position, and thus, a mold clamping force is generated.

In the mold clamping process, the mold clamping motor 160 is driven to maintain the position of the crosshead 151 at the mold clamping position. In the mold clamping process, the mold clamping force generated in the pressurization process is maintained. In the mold clamping process, a cavity space 801 (refer to Fig. 2) is formed between the movable mold 820 and the stationary mold 810, and the cavity space 801 is filled with a liquid molding material by the injection unit 300. A filled molding material is solidified, and thus, a molding product can be obtained.

The number of cavity spaces 801 may be one or more. When a plurality of cavity spaces 801 are provided, a plurality of molding products can be obtained at the same time. An insert material may be disposed in a portion of the cavity space 801 and the other portion of the cavity space 801 may be filled with the molding material. A molding product in which the insert material and the molding material are integrated with each other can be obtained.

In the depressurization process, the mold clamping motor 160 is driven to move the crosshead 151 rearward from the mold clamping position to a mold opening start position, and thus, the movable platen 120 moves rearward, and the mold clamping force is decreased. The mold opening start position and the mold closing completion position may be the same as each other.

In the mold opening process, the mold clamping motor 160 is driven to move the crosshead 151 rearward from the mold opening start position to a mold opening completion position at the set movement speed. Accordingly, the movable platen 120 moves rearward, and the movable mold 820 is separated from the stationary mold 810. Thereafter, the ejector unit 200 ejects the molding product from the movable mold 820.

Setting conditions in the mold closing process, the pressurization process, and the mold clamping process are collectively set as a series of setting conditions. For example, a movement speed or positions (including mold closing start position, movement speed switching position, mold closing completion position, and mold clamping position) of the crosshead 151 and the mold clamping force in the mold closing process and the pressurization process are collectively set as a series of setting conditions. The mold closing start position, the movement speed switching position, the mold closing completion position, and the mold clamping position are arranged in this order from the rear side to the front side and indicate start points and end points of sections where the movement speed is set. The movement speed is set for each section. The movement speed switching position may be one or more. The movement speed switching position may not be set. Only one of the mold clamping position and the mold clamping force may be set.

Setting conditions are similarly set in the depressurization process and the mold opening process. For example, the movement speed or positions (mold opening start position, movement speed switching position, and mold opening completion position) of the crosshead 151 in the depressurization process and the mold opening process are collectively set as a series of setting conditions. The mold opening start position, the movement speed switching position, and the mold opening completion position are arranged in this order from the front side to the rear side and indicate start points and end points of sections where the movement speed is set. The movement speed is set for each section. The movement speed switching position may be one or more. The movement speed switching position may not be set. The mold opening start position may be the same as the mold closing completion position. In addition, the mold opening completion position and the mold closing start position may be the same as each other.

In addition, instead of the movement speed, the positions, or the like of the crosshead 151, a movement speed, positions, or the like of the movable platen 120 may be set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the amplified driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 800 is changed by replacement of the mold unit 800, a temperature change of the mold unit 800, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 at the time of a touch type where the movable mold 820 comes into contact with the stationary mold 810 becomes a predetermined angle.

The mold clamping unit 100 has a mold space adjustment mechanism 180. The mold space adjustment mechanism 180 performs the mold space adjustment by adjusting the gap L between the stationary platen 110 and the toggle support 130. Moreover, for example, a timing for adjusting the mold space is performed from an end of a molding cycle to a start of a next molding cycle. For example, the mold space adjustment mechanism 180 includes a screw shaft 181 which is formed on a rear end portion of the tie bar 140, a screw nut 182 which is rotatably held to be unable to move forward or rearward by the toggle support 130, and a mold space adjustment motor 183 which rotates the screw nut 182 screwed to the screw shaft 181.

The screw shaft 181 and the screw nut 182 are provided for each tie bar 140. A rotational driving force of the mold space adjustment motor 183 may be transmitted to a plurality of screw nuts 182 via a rotational driving force transmission portion 185. The plurality of screw nuts 182 can be synchronously rotated with each other. In addition, it is possible to rotate the plurality of screw nuts 182 individually by changing a transmission path of the rotational driving force transmission portion 185.

For example, the rotational driving force transmission portion 185 includes a gear or the like. In this case, a driven gear is formed on an outer periphery of each screw nut 182, a drive gear is attached to an output shaft of the mold space adjustment motor 183, and an intermediate gear which engages with a plurality of driven gears and drive gears is rotatably held by a center portion of the toggle support 130. In addition, the rotational driving force transmission portion 185 may include a belt, a pulley, or the like instead of the gear.

An operation of the mold space adjustment mechanism 180 is controlled by the controller 700. The controller 700 drives the mold space adjustment motor 183 to rotate the screw nut 182. As a result, the position of the toggle support 130 with respect to the tie bar 140 is adjusted, and the gap L between the stationary platen 110 and the toggle support 130 is adjusted. In addition, a plurality of mold space adjustment mechanisms may be used in combination.

The gap L is detected using a mold space adjustment motor encoder 184. The mold space adjustment motor encoder 184 detects a rotation amount or a rotation direction of the mold space adjustment motor 183 and sends a signal indicating a detection result to the controller 700. The detection results of the mold space adjustment motor encoder 184 is used to monitor or control the position of the toggle support 130 or the gap L. In addition, a toggle support position detector which detects the position of the toggle support 130 and a gap detector which detects the gap L are not limited to the mold space adjustment motor encoder 184, and a general encoder can be used.

In addition, the mold clamping unit 100 of the present embodiment is a horizontal type mold clamping unit in which the mold opening and closing directions are horizontal directions. However, the mold clamping unit 100 may be a vertical type mold clamping unit in which the mold opening and closing directions are vertical directions.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### (Ejector Unit)

Similarly to the descriptions of the mold clamping unit 100, in descriptions of the ejector unit 200, the movement direction (for example, X-axis positive direction) of the movable platen 120 when the mold is closed is defined as the front side, and the movement direction (for example, X-axis negative direction) of the movable platen 120 when the mold is opened is defined as the rear side.

The ejector unit 200 is attached to the movable platen 120 and moves forward and rearward together with the movable platen 120. The ejector unit 200 includes an ejector rod 210 which ejects the molding product from the mold unit 800, and a drive mechanism 220 which moves the ejector rod 210 in a movement direction (X-axis direction) of the movable platen 120.

The ejector rod 210 is disposed to be movable forward or rearward through a through-hole of the movable platen 120. A front end portion of the ejector rod 210 comes into contact with a movable member 830 which is disposed to be movable forward or rearward inside the movable mold 820. The front end portion of the ejector rod 210 may be connected to the movable member 830 or may not be connected to the movable member 830.

For example, the drive mechanism 220 includes an ejector motor and a motion conversion mechanism that converts a rotary motion of the ejector motor into a linear motion of the ejector rod 210. The motion conversion mechanism includes a screw shaft and a screw nut which is screwed to the screw shaft. A ball or a roller may be interposed between the screw shaft and the screw nut.

The ejector unit 200 performs an ejection process under the control of the controller 700. In the ejection process, the ejector rod 210 is moved forward from a standby position to an ejection position at a set movement speed, and thus, the movable member 830 moves forward and the molding product is ejected. Thereafter, the ejector motor is driven to move the ejector rod 210 rearward at a set movement speed, and thus, the movable member 830 moves rearward to an original standby position.

For example, a position or movement speed of the ejector rod 210 is detected using an ejector motor encoder. The ejector motor encoder detects the rotation of the ejector motor and sends a signal indicating a detection result to the controller 700. In addition, an ejector rod position detector which detects the position of the ejector rod 210 and an ejector rod movement speed detector which detects the movement speed of the ejector rod 210 are not limited to the ejector motor encoder, and a general detector can be used.

### (Injection Unit)

Unlike the descriptions of the mold clamping unit 100 or the descriptions of the ejector unit 200, in descriptions of the injection unit 300, a movement direction (for example, X-axis negative direction) of a screw 330 during filling is referred to as a front side, and a movement direction (for example, X-axis positive direction) of the screw 330 during plasticizing is referred to as a rear side.

The injection unit 300 is installed on a slide base 301, and the slide base 301 is disposed so as to be movable forward or rearward with respect to the injection unit frame 920. The injection unit 300 is disposed to be movable forward or rearward with respect to the mold unit 800. The injection unit 300 comes into contact with the mold unit 800, and the cavity space 801 inside the mold unit 800 is filled with the molding material by the injection unit 300. For example, the injection unit 300 includes a cylinder 310, a nozzle 320, the screw 330, a plasticizing motor 340, an injection motor 350, a pressure detector 360, or the like.

The cylinder 310 heats the molding material which is supplied from a feed port 311 to the inner portion of the cylinder 310. For example, the molding material includes a resin or the like. For example, the molding material is formed into pellets and is supplied to the feed port 311 in a solid state. The feed port 311 is formed on a rear portion of the cylinder 310. A cooler 312 such as a water cooling cylinder is provided on an outer periphery of the rear portion of the cylinder 310. A heating unit 313 such as a band heater and a temperature measurer 314 are provided on an outer periphery of the cylinder 310 on a front side of the cooler 312.

The cylinder 310 is divided into a plurality of zones in an axial direction (for example, X-axis direction) of the cylinder 310. The heating unit 313 and the temperature measurer 314 are provided in each of the plurality of zones. A set temperature is set in each of the plurality of zones, and the controller 700 controls the heating unit 313 so that a temperature measured by the temperature measurer 314 becomes the set temperature.

The nozzle 320 is provided on the front end portion of the cylinder 310 and presses the mold unit 800. The heating unit 313 and the temperature measurer 314 are provided on an outer periphery of the nozzle 320. The controller 700 controls the heating unit 313 such that a detection temperature of the nozzle 320 becomes a set temperature.

The screw 330 is disposed in the cylinder 310 so as to be rotatable and movable forward or rearward. When the screw 330 rotates, the molding material is fed forward along helical grooves of the screw 330. The molding material is gradually melted by heat from the cylinder 310 while being fed forward. The liquid molding material is fed to a front portion of the screw 330 and is accumulated in the front portion of the cylinder 310, and thus, the screw 330 moves rearward. Thereafter, when the screw 330 moves forward, the liquid molding material accumulated in front of the screw 330 is injected from the nozzle 320 and the inside of the mold unit 800 is filled with the liquid molding material.

A backflow prevention ring 331 is attached to a front portion of the screw 330 to be movable forward or rearward as a backflow prevention valve which prevents backflow of the molding material from the front side of the screw 330 toward the rear side when the screw 330 is pushed forward.

When the screw 330 moves forward, the backflow prevention ring 331 is pushed toward the rear side by the pressure of the molding material in front of the screw 330 and moves rearward relatively to the screw 330 to a close position (refer to Fig. 2) at which a flow path of the molding material is closed. Accordingly, the molding material accumulated in front of the screw 330 is prevented from flowing toward the rear side.

Meanwhile, when the screw 330 rotates, the backflow prevention ring 331 is pushed toward the front side by the pressure of the molding material fed forward along the helical grooves of the screw 330 and moves forward relatively to the screw 330 to an open position (refer to Fig. 1) at which the flow path of the molding material is open. Accordingly, the molding material is fed to the front side of the screw 330.

The backflow prevention ring 331 may be either a co-rotation type ring which rotates together with the screw 330 or a non-co-rotation type ring which does not rotate together with the screw 330.

In addition, the injection unit 300 may include a drive source which moves the backflow prevention ring 331 forward or rearward with respect to the screw 330 between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder, for example .

The pressure detector 360 detects a force transmitted between the injection motor 350 and the screw 330. The detected force is converted into a pressure by the controller 700. The pressure detector 360 is provided on a force transmission path between the injection motor 350 and the screw 330 and detects a force applied to the pressure detector 360.

The pressure detector 360 sends a signal indicating a detection result to the controller 700. The detection result of the pressure detector 360 is used to control or monitor a pressure received by the screw 330 from the molding material, a back pressure with respect to the screw 330, a pressure applied from the screw 330 to the molding material, or the like.

The injection unit 300 performs a plasticizing process, a filling process, a holding pressure process, or the like under the control of the controller 700. The filling process and the holding pressure process are collectively referred to as an injection process.

In the plasticizing process, the plasticizing motor 340 is driven to rotate the screw 330 at a set rotating speed and the molding material is fed forward along the helical grooves of the screw 330 by the screw 330. According to this, the molding material is gradually melted. The liquid molding material is fed to a front portion of the screw 330 and is accumulated in the front portion of the cylinder 310, and thus, the screw 330 moves rearward. For example, the rotating speed of the screw 330 is detected using a plasticizing motor encoder 341. The plasticizing motor encoder 341 detects the rotation of the plasticizing motor 340 and sends a signal indicating a detection result to the controller 700. In addition, a screw rotational speed detector which detects the rotating speed of the screw 330 is not limited to the plasticizing motor encoder 341, and a general detector can be used.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends a signal indicating a detection result to the controller 700. If the screw 330 moves rearward to a plasticizing completion position and a predetermined amount of the molding materials is accumulated in front of the screw 330, the plasticizing process is completed.

The position and rotating speed of the screw 330 in the plasticizing process are collectively set as a series of setting conditions. For example, the plasticizing start position, a rotating speed switching position, and the plasticizing completion position are set. These positions are arranged in this order from the front side to the rear side, and indicate start points and end points of sections where the rotating speed is set. The rotating speed is set for each section. The rotating speed switching position may be one or more. The rotating speed switching position may not be set. In addition, the back pressure is set for each section.

In the filling process, the injection motor 350 is driven to move the screw 330 forward at a set movement speed, and the cavity space 801 inside the mold unit 800 is filled with the liquid molding material accumulated in front of the screw 330. For example, a position or movement speed of the screw 330 is detected using an injection motor encoder 351. The injection motor encoder 351 detects the rotation of the injection motor 350 and sends a signal indicating a detection result to the controller 700. When the position of the screw 330 reaches a set position, switching (so called V/P switching) from the filling process to the holding pressure process is performed. The position at which the V/P switching is performed is also referred to a V/P switching position. The set movement speed of the screw 330 may be changed according to the position of the screw 330, the time, or the like.

The position and the movement speed of the screw 330 in the filling process are collectively set as a series of setting conditions. For example, a filling start position (also called "injection start position"), a movement speed switching position, and a V/P switching position are set. These positions are arranged in this order from the rear side to the front side, and indicate the start points and the end points of the sections where the movement speed is set. The movement speed is set for each section. The movement speed switching position may be one or more. The movement speed switching position may not be set.

An upper limit of the pressure of the screw 330 is set for each section where the movement speed of the screw 330 is set. The pressure of the screw 330 is detected by the pressure detector 360. In a case where a detection value of the pressure detector 360 is a set pressure or less, the screw 330 moves forward at the set movement speed. Meanwhile, in a case where the detection value of the pressure detector 360 exceeds the set pressure, in order to protect the mold, the screw 330 moves forward at a movement speed slower than the set movement speed such that the detection value of the pressure detector 360 is the set pressure or less.

Moreover, in the filling process, after the position of the screw 330 reaches the V/P switching position, the screw 330 may temporarily stop at the V/P switching position, and thereafter, the V/P switching may be performed. Immediately before the V/P switching, instead of stopping the screw 330, the screw 330 may move forward or may move rearward at a very slow speed. Moreover, a screw position detector which detects the position of the screw 330 and a screw movement speed detector which detects the movement speed of the screw 330 are not limited to the injection motor encoder 351, and a general detector can be used.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 800. Insufficient molding materials can be replenished by cooling shrinkage in the mold unit 800. For example, the holding pressure is detected using the pressure detector 360. The pressure detector 360 sends a signal indicating a detection result to the controller 700. A set value of the holding pressure may be changed according to an elapsed time from the starting of the holding pressure process, or the like. A plurality of holding pressures and a plurality of holding times during when the holding pressures are held in the holding pressure process may be set, and may be collectively set as a series of setting conditions.

In the holding pressure process, the molding material inside the cavity space 801 in the mold unit 800 is gradually cooled, and when the holding pressure process is completed, an inlet of the cavity space 801 is closed by the molding material which is solidified. This state is referred to as a gate seal, and a backflow of the molding material from the cavity space 801 is prevented. After the holding pressure process, a cooling process starts. In the cooling process, solidification of the molding material in the cavity space 801 is performed. In order to shorten a molding cycle time, the plasticizing process may be performed during the cooling process.

In addition, the injection unit 300 of the present embodiment is an inline and screw type injection unit. However, the injection unit 300 may be a preplasticizing type injection unit. The preplasticizing type injection unit supplies the melted molding material inside a plasticizing cylinder to an injection cylinder and injects the molding material from the injection cylinder into the mold unit. A screw is disposed to be rotatable and unmovable forward or rearward in the plasticizing cylinder or the screw is disposed to be rotatable and movable forward or rearward in the injection cylinder. Meanwhile, a plunger is disposed to be movable forward or rearward in the injection cylinder.

In addition, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is a vertical direction. The mold clamping unit combined with the vertical type injection unit 300 may be a vertical type mold clamping unit or a horizontal type mold injection unit. Similarly, the mold clamping unit combined with the horizontal type injection unit 300 may be a horizontal type mold clamping unit or a vertical type mold clamping unit.

### (Moving Unit)

Similarly to the descriptions of the injection unit 300, in descriptions of the moving unit 400, the movement direction (for example, X-axis negative direction) of the screw 330 during filling is referred to as a front side, and the movement direction (X-axis positive direction) of the screw 330 during plasticizing is referred to as a rear side.

The moving unit 400 moves the injection unit 300 rearward with respect to the mold unit 800. In addition, the moving unit 400 presses the nozzle 320 to the mold unit 800 to generate a nozzle touch pressure. The moving unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a hydraulic pressure is generated. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction corresponding to a control signal from the controller 700 and by the rotation torque corresponding to the control signal from the controller 700. The motor 420 may be an electric motor or an electric servo motor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which a first chamber and a rear chamber 436 which is a second chamber. The piston rod 433 is fixed to the stationary platen 110.

The front chamber 435 of the hydraulic cylinder 430 is connected to the first port 411 of the hydraulic pump 410 via a first flow path 401. The working liquid discharged from the first port 411 is supplied to the front chamber 435 via the first flow path 401, and thus, the injection unit 300 is pushed forward. The injection unit 300 moves forward, and thus, the nozzle 320 is pressed to the stationary mold 810. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pushed rearward. The injection unit 300 moves rearward and thus, the nozzle 320 is separated from the stationary mold 810.

In addition, in the present embodiment, the moving unit 400 includes the hydraulic cylinder 430. However, the present invention is not limited to this. For example, instead of the hydraulic cylinder 430, an electric motor and a motion conversion mechanism which converts a rotary motion of the electric motor into a linear motion of the injection unit 300 may be used.

### (Controller)

For example, the controller 700 includes a computer, and as shown in Figs. 1 and 2, the controller 700 includes a Central Processing Unit (CPU) 701, a storage medium 702 such as a memory, an input interface 703, and an output interface 704. The controller 700 performs various controls by causing the CPU 701 to execute a program stored in the storage medium 702. In addition, the controller 700 receives a signal from the outside through the input interface 703 and transmits a signal to the outside through the output interface 704.

The controller 700 repeatedly performs the plasticizing process, the mold closing process, the pressurization process, the mold clamping process, the filling process, the holding pressure process, a cooling process, the depressurization process, the mold opening process, an ejection process, or the like to repeatedly manufacture the molding product. A series of operations to obtain the molding product, for example, an operation from the start of the plasticizing process to the start of the next plasticizing process is also referred to as a "shot" or a "molding cycle". In addition, a time required for once shot is also referred to as a "molding cycle time" or a "cycle time".

For example, the once molding cycle includes the plasticizing process, the mold closing process, the pressurization process, the molding clamping process, the filling process, the holding pressure process, the cooling process, the depressurization process, the mold opening process, and the ejection process in this order. Here, this order is an order of the start of each process. The filling process, the holding pressure process, and the cooling process are performed during the mold clamping process . The start of the mold clamping process may coincide with the start of the filling process. The end of the depressurization process coincides with the start of the mold opening process.

In addition, in order to shorten the molding cycle time, the plurality of processes may be simultaneously performed. For example, the plasticizing process may be performed during the cooling process of the previous molding cycle, or may be performed during the mold clamping process. In this case, the mold closing process may be performed at a beginning of the molding cycle. In addition, the filling process may start during the molding closing process. Moreover, the ejection process may be performed the mold opening process. In a case where an on/off valve which opens or closes the flow path of the nozzle 320 is provided, the mold opening process may be performed during the plasticizing process. Accordingly, even when the mold opening process starts during the plasticizing process, if the on-off valve closes the flow path of the nozzle 320, the molding material does not leak from the nozzle 320.

In addition, the once molding cycle may include a process in addition to the plasticizing process, the mold closing process, the pressurization process, the mold clamping process, the filling process, the holding pressure process, the cooling process, the depressurization process, the mold opening process, and the ejection process.

For example, before the plasticizing process starts after the holding pressure process is completed, a pre-plasticizing suck-back process in which the screw 330 moves rearward to a preset plasticizing start position may be performed. It is possible to decrease the pressure of the molding material accumulated in front of the screw 330 before the plasticizing process starts, and it is possible to prevent the abrupt rearward movement of the screw 330 when the plasticizing process starts.

In addition, before the filling process starts after the plasticizing process is completed, a post-plasticizing suck-back process in which the screw 330 moves rearward to a preset filling start position (also referred to as an "injection start position") may be performed. It is possible to decrease the pressure of the molding material accumulated in front of the screw 330 before the filling process starts, and leakage of the molding material from the nozzle 320 before the filling process starts can be prevented.

The controller 700 is connected to an operation unit 750 which receives input operations by a user and a display unit 760 which displays a display screen. For example, the operation unit 750 and the display unit 760 may include a touch panel to be integrated with each other. The touch panel as the display unit 760 displays the display screen under the control of the controller 700. For example, information such as setting of the injection molding machine 10 and a current state of the injection molding machine 10 may be displayed on the display screen of the touch panel. Further, for example, an input operation unit such as a button which receives an input operation by the user or an input field may be displayed on the display screen of the touch panel. The touch panel as the operation unit 750 detects the input operation on the display screen by the user and outputs a signal corresponding to the input operation to the controller 700. As a result, for example, the user operates the input operation unit provided on the display screen while checking the information displayed on the display screen, and thus, can set the injection molding machine 10 (including inputting the set value) or the like. Further, the user operates the input operation unit provided on the display screen, and thus, can operate the injection molding machine 10 corresponding to the input operation unit. Moreover, for example, the operation of the injection molding machine 10 may be an operation (including stopping) of the mold clamping unit 100, the ejector unit 200, the injection unit 300, the moving unit 400, or the like. Further, the operation of the injection molding machine 10 may be switching of the display screen displayed on the touch panel as the display unit 760.

In addition, although the operation unit 750 and the display unit 760 of the present embodiment are described as being integrated as a touch panel, the operation unit 750 and the display unit 760 may be provided independently. In addition, a plurality of the operation units 750 may be provided. The operation unit 750 and the display unit 760 are disposed on an operation side (Y-axis negative direction) of the mold clamping unit 100 (more specifically, the stationary platen 110).

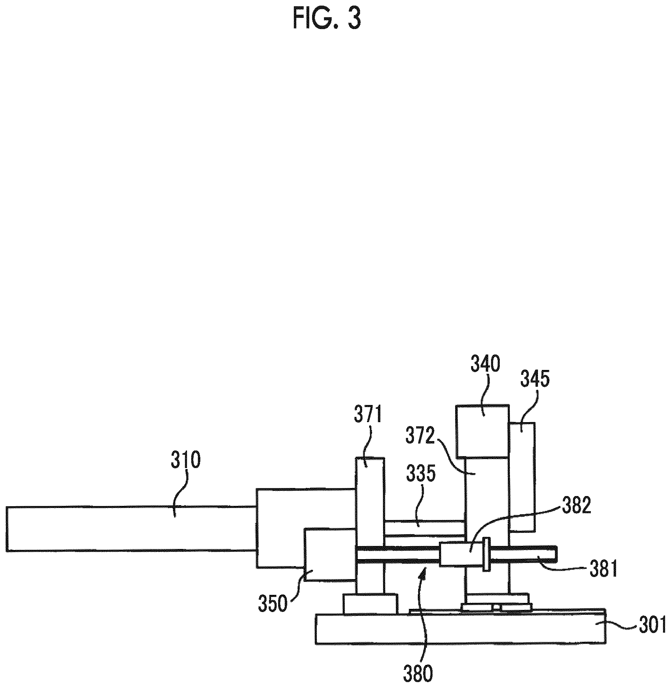

Next, an example of the injection unit 300 will be further described with reference to Fig. 3. Fig. 3 is a configuration view schematically showing the injection unit 300.

The injection unit 300 has a front support 371 and a rear support 372. The front support 371 is fixed to the slide base 301. The rear support 372 is configured to be movable forward or rearward with respect to the front support 371. In the example shown in Fig. 3, the rear support 372 moves forward or rearward along the guide on the slide base 301.

The rear support 372 supports the rotary shaft 335 and the plasticizing motor 340. The rotary shaft 335 is rotatably supported by a rotation support portion (not shown) such as a bearing provided on the rear support 372. The plasticizing motor 340 rotates the rotary shaft 335 via a transmission unit 345. The rotary shaft 335 is connected to the screw 330 (refer to Fig. 1) . As a result, the rotary shaft 335 is rotated by the plasticizing motor 340, and thus, the screw 330 is rotated in the cylinder 310.

The front support 371 supports the cylinder 310 and the injection motor 350. The injection unit 300 has a motion conversion mechanism 380 which converts the rotary motion of the injection motor 350 into a linear motion. The motion conversion mechanism 380 has a screw shaft 381 and a nut 382. The screw shaft 381 is rotatably supported by a rotation support portion (bearings 383 and 384 described later) such as a bearing provided in the front support 371. The nut 382 is fixed to the rear support 372. As a result, when the screw shaft 381 is rotated by the injection motor 350, the rear support 372 moves forward or rearward with respect to the front support 371. As the rear support 372 moves forward or rearward with respect to the front support 371, the screw 330 moves forward or rearward in the cylinder 310 via the rotary shaft 335.

It is described that the front support 371 is fixed to the slide base 301, the rear support 372 moves forward or rearward along the guide on the slide base 301, and the slide base 301 is disposed to be movable forward or rearward with respect to the injection unit frame 920. However, a configuration of the injection unit 300 is not limited to this. The slide base 301 may be omitted. In this case, each of the front support 371 and the rear support 372 may be configured to move forward or rearward along the guide on the injection unit frame 920.

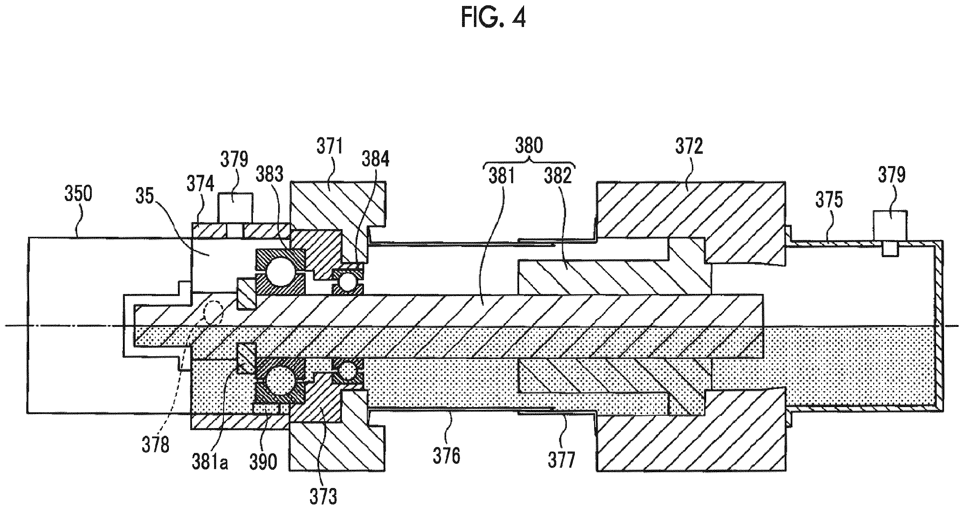

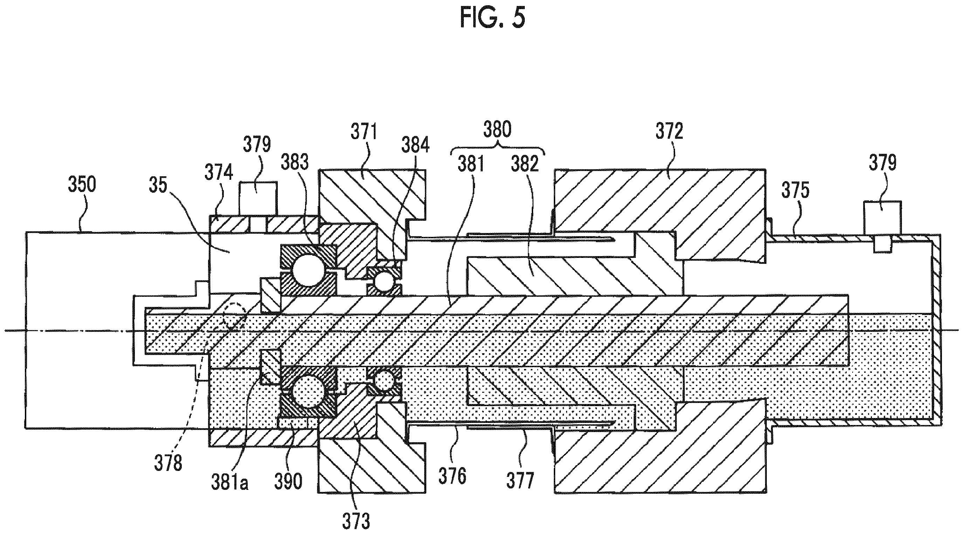

Next, a lubrication structure of the motion conversion mechanism 380 will be described with reference to Figs. 4 and 5. Figs. 4 and 5 are schematic cross-sectional views showing the lubrication structure of the motion conversion mechanism 380. Further, Fig. 4 shows a state in which the rear support 372 moves rearward, and Fig. 5 shows a state in which the rear support 372 moves forward. In addition, in Figs. 4 and 5, lubricating oil stored in an oil bath 35 is shown with dotted shading.

The front support 371 is provided with bearings 383 and 384 via a bearing support portion 373. The bearing 383 locks a locking portion 381a provided in the screw shaft 381 to support radial and axial loads. The bearing 384 mainly supports the radial load.

A cover 374 is provided between the injection motor 350 and the front support 371. A cover 375 is provided behind the rear support 372. Covers 376 and 377 are provided between the front support 371 and the rear support 372. Sealing is performed between the cover 376 and the cover 377. The cover 377 is configured to be movable in an axial direction with respect to the cover 376. In this way, the front support 371, the rear support 372, and the covers 374 to 377 form the oil bath 35 which can store the lubricating oil. The motion conversion mechanism 380 (screw shaft 381 and nut 382) and the rotation support portion (bearings 383 and 384) are disposed in the oil bath 35.

The oil bath 35 includes a feed port (not shown) and a discharge port 378. The lubricating oil is supplied into the oil bath 35 from the feed port. For example, the discharge port 378 is provided at a height of a side surface of the cover 374, for example, a central shaft of the screw shaft 381. As a result, the lubricating oil supplied from the feed port is stored in the oil bath 35 and lubricates the motion conversion mechanism 380 (screw shaft 381 and nut 382) and the rotation support portion (bearings 383 and 384). Then, the lubricating oil is sequentially supplied from the feed port, and thus, overflowing lubricating oil flows out from the discharge port 378.

The oil bath 35 includes an air breather 379. Air is sucked and exhausted through the air breather 379 according to a change in a volume of the oil bath 35. Further, as shown in Fig. 5, when the rear support 372 moves forward with respect to the front support 371 and the volume of the oil bath 35 decreases, a liquid level of the lubricating oil rises and the lubricating oil is discharged from the discharge port 378.

A magnet 390 is provided in the oil bath 35 as a collection portion for collecting a foreign matter such as abrasion powder staying in the oil bath 35. When the screw shaft 381 rotates, in the bearings 383 and 384 or the motion conversion mechanism 380 (screw shaft 381 and nut 382), a rolling body rotates on a rolling contact surface, and abrasion powder of metal (for example, iron) is generated. The magnet 390 adsorbs a foreign matter such as the abrasion powder mixed in the lubricating oil.

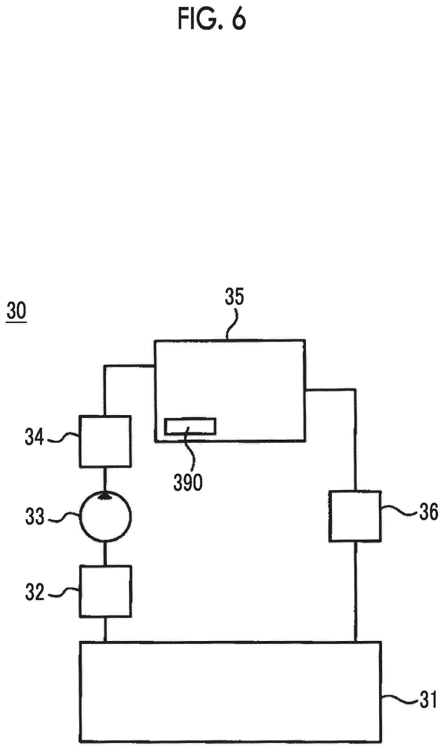

Next, a lubricating oil supply system 30 which supplies the lubricating oil for the oil bath 35 will be described with reference to Fig. 6. Fig. 6 is a block diagram of the lubricating oil supply system 30.

The lubricating oil supply system 30 includes a tank 31, a suction filter 32, a pump 33, a heat exchanger 34, an oil bath 35, and a magnet filter 36.

The tank 31 stores the lubricating oil. The suction filter 32 removes the foreign matter from the lubricating oil sucked into the pump 33. By operating the pump 33, the lubricating oil in the tank 31 is sucked into the pump 33 via the suction filter 32. The lubricating oil discharged from the pump 33 is supplied to the heat exchanger 34. The lubricating oil and cooling water are supplied to the heat exchanger 34, and the lubricating oil is cooled by exchanging heat between the lubricating oil and the cooling water.

The lubricating oil cooled by the heat exchanger 34 is supplied from a feed port (not shown) of the oil bath 35. Accordingly, the motion conversion mechanism 380 (screw shaft 381 and nut 382) and the rotation support portion (bearings 383 and 384) in the oil bath 35 are lubricated and cooled.

The lubricating oil discharged from the discharge port 378 of the oil bath 35 is stored in the tank 31 via the magnet filter 36. The magnet filter 36 adsorbs and removes the foreign matter such as the abrasion powder.

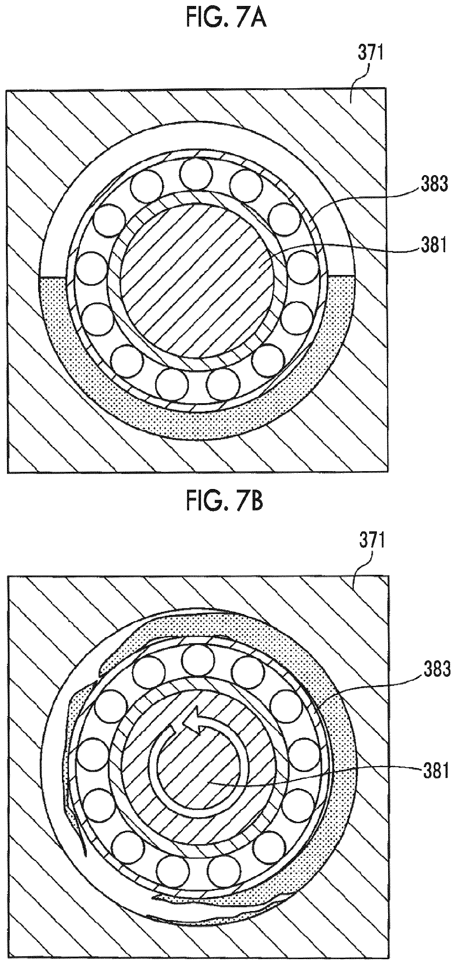

Figs. 7A and 7B are schematic views showing the state of the lubricating oil in the oil bath 35.
(A) shows a state in which the rotation of the screw shaft 381 is stopped.
(B) shows a state in which the screw shaft 381 is rotating. The direction of rotation is indicated by a white arrow.

As shown in Fig. 7A, when the rotation is stopped, a liquid level of the lubricating oil is substantially equal to a rotation center of the screw shaft 381. Further, as shown in Fig. 7B, during the rotation, the lubricating oil is scooped up by the rotation of the screw shaft 381, and the bearing 383 is suitably lubricated. Further, by making the liquid level of the lubricating oil substantially equal to the rotation center of the screw shaft 381 when the rotation is stopped, a scraping resistance of the lubricating oil can be reduced as compared with a case where the bearing 383 is submerged in oil.

As described above, according to the injection molding machine 10 of the present embodiment, the abrasion powder in the oil bath 35 can be removed. That is, the lubricating oil is supplied to the oil bath 35 from the feed port, and the overflowing lubricating oil flows out from the discharge port 378. Therefore, even when the lubricating oil circulates between the tank 31 and the oil bath 35, there are concerns that the foreign matter such as the abrasion powder may stay in the oil bath 35 and may not be suitably collected by the suction filter 32 or the magnet filter 36. By providing the magnet 390 in the oil bath 35, the foreign matter such as the abrasion powder can be suitably adsorbed. Accordingly, it is possible to prevent solid abrasion powder from entering between the rolling contact surface and the rolling body of the bearing or ball screw to be lubricated, and to prevent the rolling contact surface and a surface of the rolling element from being damaged. Therefore, a life span of the bearing or the ball screw can be extended, and durability and stability can be improved.

Further, it is preferable that the magnet 390 is disposed in the vicinity of the bearing 383. Further, it is preferable that the magnet 390 is disposed in a range of a thickness of the bearing 383, in other words, at a position overlapping the bearing 383 when viewed in an axial direction of the screw shaft 381. The magnet 390 is disposed in the vicinity of the bearing 383 to be lubricated, and thus, the abrasion powder can be suitably adsorbed.

Further, when the screw shaft 381 rotates, the bearing 383, which is a diameter-expanded portion which rotates with a diameter larger than that of the screw shaft 381, scoops up the lubricating oil. Therefore, by disposing the magnet 390 within the range of the thickness of the bearing 383 when viewed in the axial direction of the screw shaft 381, an amount of lubricating oil flowing around the magnet 390 increases, and thus, the abrasion powder mixed in the lubricating oil can be suitably adsorbed.

Further, it is preferable that the magnet 390 is provided in a lower portion inside the oil bath 35. As shown in Fig. 7A, when the rotation of the screw shaft 381 is stopped, the abrasion powder mixed in the lubricating oil is settled. By providing the magnet 390 in the lower portion inside the oil bath 35, the settled abrasion powder can be suitably adsorbed.

Further, the magnet 390 may be provided on a side or an upper portion or above inside the oil bath 35. As shown in Fig. 7B, when the screw shaft 381 rotates, the lubricating oil is scooped up. Therefore, the abrasion powder mixed in the scooped-up lubricating oil can be suitably adsorbed.

Hereinbefore, the embodiments of the injection molding machine or the like is described. However, the present invention is not limited to the embodiments or the like, and various modifications and improvements are possible within the scope of the gist of the present invention described in claims.

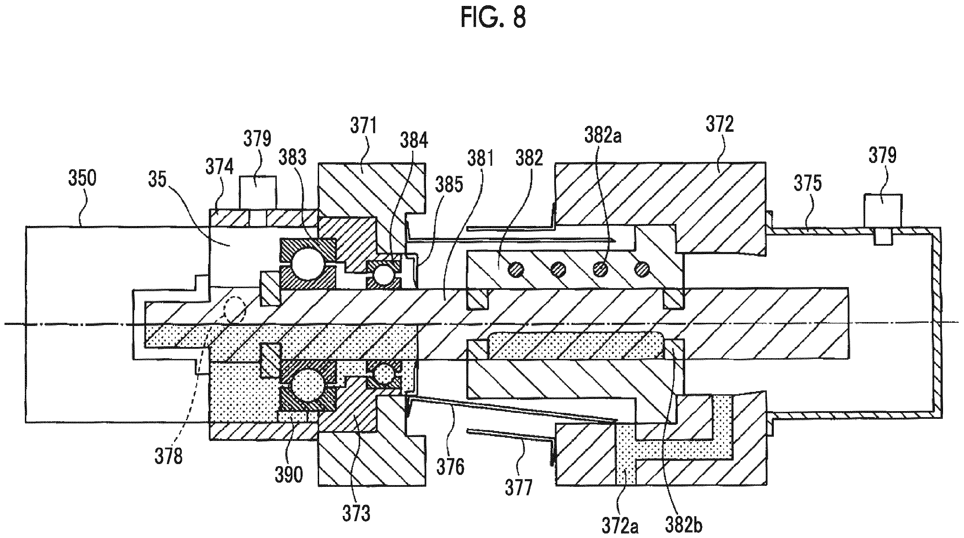

Fig. 8 is a schematic cross-sectional view showing another example of the lubrication structure of the motion conversion mechanism 380. Fig. 8 shows a state in which the rear support 372 moves forward, and a state in which the rear support 372 moves rearward is not shown.

In the lubrication structure of the motion conversion mechanism 380 shown in Figs. 4 and 5, the rotation support portion (bearings 383 and 384) and the motion conversion mechanism 380 (screw shaft 381 and nut 382) are lubricated in the oil bath 35. Meanwhile, in the lubrication structure of the motion conversion mechanism 380 shown in Fig. 8, the rotation support portion (bearings 383 and 384) and the motion conversion mechanism 380 (screw shaft 381 and nut 382) are individually lubricated. Other configurations are the same as each other, and repeated descriptions will be omitted.

The rotation support portion (bearings 383 and 384) is disposed in the oil bath 35 including the front support 371, the cover 374, and a sealing member 385. That is, the rotation support portions (bearings 383 and 384) are lubricated with the lubricating oil stored in the oil bath 35.

Further, the motion conversion mechanism 380 (screw shaft 381 and nut 382) is lubricated by pouring the lubricating oil. That is, the lubricating oil is supplied to the screw shaft 381 and the nut 382 from feed ports 382a formed in the nut 382. Sealing members 382b are provided on both ends of the nut 382. The lubricating oil supplied from the feed ports 382a is stored by the sealing members 382b and lubricates the screw shaft 381 and the nut 382. The lubricating oil overflowing from the sealing members 382b is discharged from a discharge path 372a. A lower side of the cover 376 is formed so as to be inclined so that a side of the rear support 372 is downward. As a result, the lubricating oil overflowing from a front side of the nut 382 is guided through the cover 376 to the discharge path 372a of the rear support 372. Further, a lower side of the cover 376 may be formed so as to be inclined so that a side of the front support 371 is downward. In this case, a discharge path may be provided in the front support 371.

According to the configuration, the rotation support portion (bearings 383 and 384) can be lubricated in the oil bath 35. Further, the screw shaft 381 and the nut 382 can be lubricated by pouring the lubricating oil. Further, a structure of the oil bath 35 of which a volume is not changed by moving the rear support 372 forward or rearward can be formed.

Moreover, the lubrication structure for lubricating the injection drive unit (the rotation support portion such as the bearing which rotatably supports the screw shaft 381 rotated by the injection motor 350, and the motion conversion mechanism 380 having the screw shaft 381 and the nut 382) of the injection unit 300 is described as an example. However, the present invention is not limited to this. The present invention may be applied to a lubrication structure for lubricating a plasticizing drive unit (a rotation support portion such as a bearing which rotatably supports the rotary shaft 335) of the injection unit 300. Further, the present invention may be applied to a lubrication structure for lubricating the motion conversion mechanism 170 of the mold clamping unit 100. Moreover, the present invention may be applied to a lubrication structure for lubricating the drive mechanism 220 of the ejector unit 200.

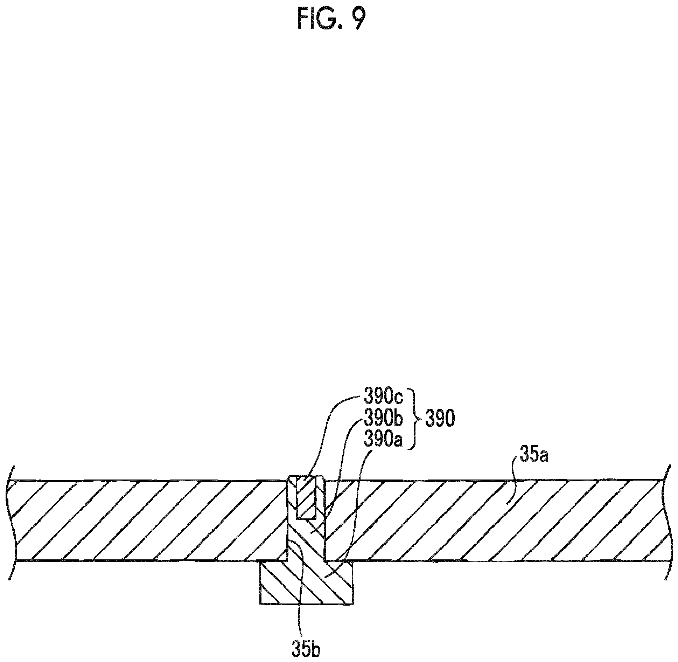

Fig. 9 is a schematic cross-sectional view showing an example of structure and disposition of the magnet 390. As shown in Fig. 9, the magnet 390 is a magnet bolt having a head portion 390a, a shaft portion 390b, and a magnet portion 390c which is provided in the shaft portion 390b. The magnet bolt is screwed into the bolt hole 35b provided on a wall surface 35a of the oil bath 35 from an outside of the wall surface 35a. According to this configuration, the magnet portion 390c of the magnet bolt is disposed in the oil bath 35. When removing the abrasion powder adsorbed to the magnet bolt, maintenance can be easily performed by removing the magnet bolt from the bolt hole 35b.

Further, it is preferable that the magnet bolt is disposed in the vicinity of the bearing 383. Further, it is preferable that the magnet bolt is disposed in the range of the thickness of the bearing 383, in other words, at a position overlapping the bearing 383 when viewed in the axial direction of the screw shaft 381. The magnet bolt is disposed in the vicinity of the bearing 383 to be lubricated, and thus, the abrasion powder can be suitably adsorbed. Further, when the screw shaft 381 rotates, the bearing 383, which is a diameter-expanded portion which rotates with a diameter larger than that of the screw shaft 381, scoops up the lubricating oil. Therefore, by disposing the magnet bolt in the range of the thickness of the bearing 383 when viewed in the axial direction of the screw shaft 381, an amount of lubricating oil flowing around the magnet bolt increases, and the abrasion powder mixed in the lubricating oil can be suitably adsorbed.

Further, the magnet bolt may be disposed in a lower portion inside the oil bath 35. Accordingly, the settled abrasion powder can be suitably adsorbed. Further, the magnet bolt may be arranged above the liquid level of the lubricating oil. Further, the magnet bolt may be provided over the entire circumference of the cylindrical oil bath 35. Therefore, the amount of abrasion powder adsorbed can increase.

Hereinbefore, the embodiments of the injection molding machine 10 or the like is described. However, the present invention is not limited to the embodiments or the like, and various modifications and improvements are possible within the scope of the present invention described in claims.

The example is described in which the magnet 390 which adsorbs the foreign matter by a magnetic force is used as a collection portion for collecting the foreign matter such as the abrasion powder which stays in the oil bath 35. However, the collection portion is not limited to the magnet 390. A net, a bag, or the like may be used as the collection portion. The net, the bag, or the like as the collection portion has pores through which the lubricating oil can flow, and thus, the lubricating oil can flow through the pores and the foreign matter in the lubricating oil can be collected.

### Brief Description of the Reference Symbols

10: injection molding machine
100: mold clamping unit
170: motion conversion mechanism (mold clamping drive unit)
200: ejector unit
220: drive mechanism (ejector drive unit)
300: injection unit
340: plasticizing motor
350: injection motor
371: front support
372: rear support
373: bearing support portion
374-377: cover
378: discharge port (overflow flow path)
379: air breather
380: motion conversion mechanism (injection drive unit)
381: screw shaft (lubrication portion)
382: nut (lubrication portion)
383,384: bearing (lubrication portion)
385: sealing member
390: magnet (collection portion)
390a: head portion
390b: shaft portion
390c: magnet portion
30: lubricating oil supply system
31: tank
32: suction filter
33: pump
34: heat exchanger
35: oil bath
36: magnet filter

## Claims

1. An injection molding machine (10) comprising:
a tank (31) configured to store lubricating oil;
an oil bath (35) configured to accommodate a lubrication portion (381, 382, 383, 384) of the injection molding machine (10);
a circulation mechanism (30) configured to circulate the lubricating oil between the tank (31) and the oil bath (35),
**characterized in that** the injection molding machine (10) further comprises:
a magnet filter (36) which is provided in the circulation mechanism (30) and configured to collect
a foreign matter flowing into the tank (31); and
a collection portion (390) which is provided in the oil bath (35), is capable of being separated from the oil bath (35), and configured to collect
abrasion powder staying in the lubricating oil in the oil bath (35).

2. The injection molding machine (10) according to claim 1,
wherein the collection portion (390) is a magnet which is capable of adsorbing the abrasion powder mixed in the lubricating oil in the oil bath (35).

3. The injection molding machine (10) according to claim 2,
wherein the collection portion (390) is a magnet bolt in which a magnet portion (390c) is provided in a shaft portion (390b) of the bolt, and
the magnet bolt is screwed to a wall surface (35a) of the oil bath (35).

4. The injection molding machine (10) according to any one of claims 1 to 3, further comprising:
a heat exchanger (34) configured to cool the lubricating oil to be supplied to the oil bath (35).

5. The injection molding machine (10) according to any one of claims 1 to 4,
wherein the lubrication portion (381, 382, 383, 384) is at least one of an injection drive unit (380), a plasticizing drive unit, a mold clamping drive unit (170), and an ejector drive unit (220).

## Patentansprüche

1. Spritzgießmaschine (10), umfassend:
einen Tank (31), der für die Lagerung von Schmieröl konfiguriert ist;
ein Ölbad (35), das konfiguriert ist, einen Schmierabschnitt (381, 382, 383, 384) der Spritzgießmaschine (10) aufzunehmen;
ein Zirkulationsmechanismus (30), der konfiguriert ist, das Schmieröl zwischen dem Tank (31) und dem Ölbad (35) zu zirkulieren,
**dadurch gekennzeichnet ist, dass** die Spritzgießmaschine (10) ferner umfasst:
einen Magnetfilter (36), der in dem Zirkulationsmechanismus (30) vorgesehen und konfiguriert ist, einen in den Tank (31) strömenden Fremdstoff zu sammeln; und
einen Sammelabschnitt (390), der in dem Ölbad (35) vorgesehen ist, von dem Ölbad (35) getrennt werden kann und konfiguriert ist, in dem Schmieröl in dem Ölbad (35) verbleibendes Abriebpulver zu sammeln.

2. Spritzgießmaschine (10) nach Anspruch 1,
wobei der Sammelabschnitt (390) ein Magnet ist, der in der Lage ist, das mit dem Schmieröl in dem Ölbad (35) vermischte Abriebpulver zu adsorbieren.

3. Spritzgießmaschine (10) nach Anspruch 2,
wobei der Sammelabschnitt (390) eine Magnetschraube ist, bei der ein Magnetabschnitt (390c) in einem Schaftabschnitt (390b) der Schraube vorgesehen ist, und
die Magnetschraube an eine Wandfläche (35a) des Ölbads (35) geschraubt ist.

4. Spritzgießmaschine (10) nach einem der Ansprüche 1 bis 3, ferner umfassend:
einen Wärmetauscher (34), der konfiguriert ist, das dem Ölbad (35) zuzuführende Schmieröl zu kühlen.

5. Spritzgießmaschine (10) nach einem der Ansprüche 1 bis 4,
wobei der Schmierabschnitt (381, 382, 383, 384) mindestens eine von einer Einspritz-Antriebseinheit (380), einer Plastifizier-Antriebseinheit, einer Formschließ-/klemm-Antriebseinheit (170) und einer Einspritzer-Antriebseinheit (220) ist.

## Revendications

1. Une machine de moulage par injection (10) comprenant :
un réservoir (31) configuré pour stocker de l'huile de lubrification ;
un bain d'huile (35) configuré pour contenir une partie de lubrification (381, 382, 383, 384) de la machine de moulage par injection (10) ;
un mécanisme de circulation (30) configuré pour faire circuler l'huile de lubrification entre le réservoir (31) et le bain d'huile (35),
**caractérisée en ce que** la machine de moulage par injection (10) comprend en outre :
un filtre à aimant (36) qui est prévu dans le mécanisme de circulation (30) et configuré pour collecter un corps étranger qui circule dans le réservoir (31) ; et
une partie de collecte (390) qui est prévue dans le bain d'huile (35), qui peut être séparée du bain d'huile (35), et qui est configurée pour collecter la poudre d'abrasion qui reste dans l'huile de lubrification dans le bain d'huile (35).

2. La machine de moulage par injection (10) selon la revendication 1,
dans laquelle la partie de collecte (390) est un aimant qui est capable d'absorber la poudre d'abrasion mélangée dans l'huile de lubrification dans le bain d'huile (35).

3. La machine de moulage par injection (10) selon la revendication 2,
dans laquelle la partie de collecte (390) est un boulon à aimant dans lequel une partie d'aimant (390c) est prévue dans une partie d'axe (390b) du boulon, et
le boulon à aimant est vissé sur une surface de paroi (35a) du bain d'huile (35).

4. La machine de moulage par injection (10) selon l'une quelconque des revendications 1 à 3, comprenant en outre :
un échangeur thermique (34) configuré pour refroidir l'huile de lubrification à fournir au bain d'huile (35).

5. La machine de moulage par injection (10) selon l'une quelconque des revendications 1 à 4,
dans laquelle la partie de lubrification (381, 382, 383, 384) est au moins l'une d'une unité d'entraînement d'injection (380), d'une unité d'entraînement de plastification, d'une unité d'entraînement de serrage de moule (170), et d'une unité d'entraînement d'éjecteur (220).
